Europäisches Patentamt

European Patent Office

Office européen des brevets

(19)

(11) **EP 0 828 955 B1**

(12) **EUROPÄISCHE PATENTSCHRIFT**

(45) Veröffentlichungstag und Bekanntmachung des Hinweises auf die Patenterteilung:
**29.09.1999 Patentblatt 1999/39**

(21) Anmeldenummer: 96919727.6

(22) Anmeldetag: **09.05.1996**

(51) Int Cl.⁶: **F16H 61/00**

(86) Internationale Anmeldenummer:
**PCT/EP96/01946**

(87) Internationale Veröffentlichungsnummer:
**WO 96/37716 (28.11.1996 Gazette 1996/52)**

(54) **HYDRAULIKNOTSTEUERUNG FÜR EINE ÄNDERUNG DER HYDRAULIKÖLDRÜCKE IN DER HYDRAULISCHEN KEGELSCHEIBENAXIALVERSTELLUNG EINES STUFENLOSEN UMSCHLINGUNGSGETRIEBES ZUR VARIATION DER KLEMMKRAFTVERHÄLTNISSE**

HYDRAULIC EMERGENCY CONTROL FOR CHANGING HYDRAULIC OIL PRESSURE IN THE HYDRAULIC CONICAL PULLEY AXIAL ADJUSTMENT MECHANISM OF A CONTINUOUSLY VARIABLE TRANSMISSION FOR VARYING THE CLAMPING FORCE RATIO

COMMANDE HYDRAULIQUE D'URGENCE PERMETTANT DE MODIFIER LA PRESSION D'HUILE HYDRAULIQUE DANS LE MECANISME HYDRAULIQUE D'AJUSTEMENT AXIAL DES POULIES CONIQUES D'UNE TRANSMISSION A VARIATION CONTINUE POUR FAIRE VARIER LE RAPPORT DES FORCES DE SERRAGE

(84) Benannte Vertragsstaaten:
**BE DE FR GB IT NL**

(30) Priorität: **24.05.1995 DE 19519163**

(43) Veröffentlichungstag der Anmeldung:
**18.03.1998 Patentblatt 1998/12**

(73) Patentinhaber:
• **ROBERT BOSCH GMBH**
  **70442 Stuttgart (DE)**
• **Van Doorne's Transmissie B.V.**
  **NL-5000 AM Tilburg (NL)**

(72) Erfinder:
• **SPIESS, Ewald**
  **D-71665 Vaihingen an der Enz (DE)**

• **HAECKER, Hans**
  **D-74343 Sachsenheim (DE)**
• **LUH, Joachim**
  **D-74321 Bietigheim-Bissingen (DE)**
• **BAEUERLE, Peter**
  **D-71636 Ludwigsburg (DE)**
• **PELDERS, Hendrikus, A., A., W.**
  **NL-5231 PK 's-Hertogenbosch (NL)**
• **VAN WIJK, Wilhelmus, J., M.**
  **NL-5071 AN Udenhout (NL)**

(56) Entgegenhaltungen:
**DE-A- 4 234 103          DE-A- 4 340 431**

## Beschreibung

Stand der Technik

Die Erfindung geht von einer Hydrauliknotsteuerung nach dem Oberbegriff des Hauptanspruchs aus.

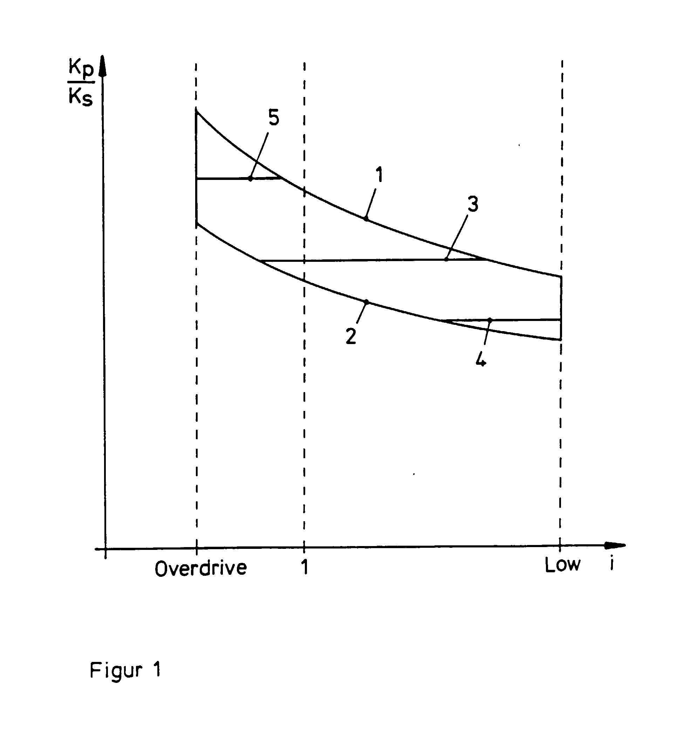

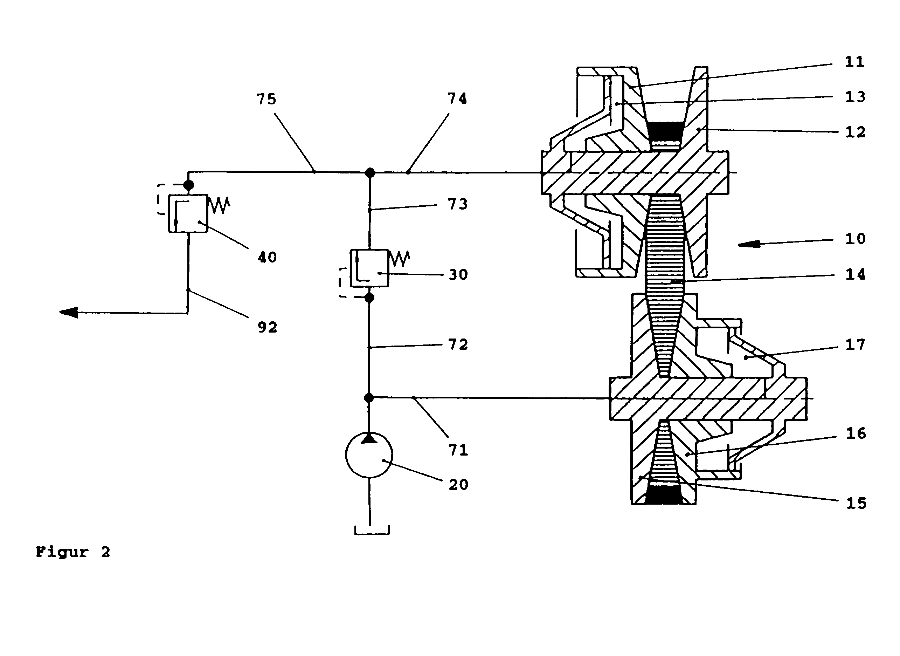

In der DE-42 34 103 A1 ist eine Hydrauliknotsteuerung für ein elektronisch gesteuertes, kontinuierlich variables Getriebe (continuously variable transmission, CVT) beschrieben. Das CVT-Getriebe, das vorzugsweise in Kraftwagen verwendet wird, weist eine Steuerung für den Notfahrbetrieb auf, die bei einem Ausfall der elektrischen Ansteuerung des Normalfahrbetriebs in eine Schaltstellung mit hohem Übersetzungsverhältnis veranlaßt, um somit günstigere Neustart- und Anfahrbedingungen zu schaffen. Bei dieser Steuerung wird u.a. das Verhältnis von primärer zu sekundärer Klemmkraft zwischen dem Zugmittel und den Kegelscheibenpaaren über einen Zwischenübersetzungsbereich konstant gehalten. In dem Zwischenübersetzungsbereich ändert sich die Obersetzung in Abhängigkeit vom Drehmomentbedarf der Abtriebswelle. Bei hohem Bedarf wird eine hohe Obersetzung gewählt, während bei niedrigem Bedarf eine kleine Obersetzung eingestellt wird. Die hierzu notwendigen Mittel werden in der Beschreibung zu den Figuren 1 und 2 angegeben.

Vorteile der Erfindung

Die erfindungsgemäße Hydrauliknotsteuerung wird benötigt, um ein stufenlos übersetzendes Umschlingungsgetriebe ohne die Unterstützung einer im Normalfahrbetrieb aktiven elektrohydraulischen Ansteuerung über den gesamten Obersetzungsbereich benutzen zu können. Mit Hilfe der Hydrauliknotsteuerung soll bei einem Fahrzeugstart eine Anfahrübersetzung im Low-Bereich eingestellt werden, um z.B. ein Anfahren am Berg oder aus einer Tiefgarage heraus zu ermöglichen. Ebenso soll die Notsteuerung bei hohen Fahrgeschwindigkeiten und niedrigem Motordrehmoment eine Obersetzung im Overdrive-Bereich einstellen. Als Nutzen hiervon kann zum einen im Notfahrbetrieb auch die Höchstgeschwindigkeit erreicht werden und zum anderen wird ein Überdrehen des Motors bei einem Ausfall der elektronischen Ansteuerung bei Höchstgeschwindigkeit vermieden.

Bei der erfindungsgemäßen Hydrauliknotsteuerung wird das Klemmkraftverhältnis abhängig vom geförderten Pumpenvolumenstrom bzw. der Motordrehzahl variiert. Dazu ist in einer offenen Hydraulikschaltung zur Versorgung der jeweiligen Kolbenräume der sekundären und primären Axialverstellungen mindestens ein Drosselventil angeordnet. Das einzelne Drosselventil befindet sich in Strömungsrichtung des Druckmittels gesehen zwischen der - beispielsweise vom Fahrzeugmotor angetriebenen - Hydraulikpumpe und dem Ausgang aus dieser offenen Hydraulikschaltung an einer den Pumpenvolumenstrom beeinflussenden Stelle. Die sich am jeweiligen Drosselventil einstellende volumenstromabhängige Druckänderung verändert den Anpreßdruck im entsprechenden Kegelscheibenpaar.

In den Ansprüchen 2 und 3 sind Drosselventile angegeben, mit deren Hilfe die primäre Klemmkraft verändert wird, während die Drosselventile aus den Ansprüchen 4 und 9 die Klemmkraft im Sekundärscheibensatz variieren.

Die restlichen Ansprüche beschreiben u.a. einzelne spezielle Anordnungen für die Drosselventile im Zusammenhang mit Druckbegrenzungsventilen und anderen Stromventilen.

Zeichnungen

Mehrere Ausführungsbeispiele der Erfindung sind neben dem Stand der Technik in den Zeichnungen schematisch in Form von Hydraulikschaltplänen dargestellt und in der nachfolgenden Figurenbeschreibung auch mit Hilfe eines vereinfacht bzw. idealisiert dargestellten Diagrammes näher erläutert. Es zeigen

Figur 1      ein Klemmkraftverhältnisdiagramm,

Figur 2      einen Hydraulikschaltplan für eine starre Einstellung eines vorgewählten Klemmkraftverhältnisses,

Figur 3      einen Hydraulikschaltplan für eine variable Einstellung des Klemmkraftverhältnisses durch eine Primärdruckanhebung,

Figur 4      einen Hydraulikschaltplan wie in Figur 3 mit einem Drosselventil im Ausgangsbereich,

Figur 5      einen Hydraulikschaltplan für eine variable Einstellung des Klemmkraftverhältnisses durch Absenkung des Sekundärdruckes,

Figur 6      einen Hydraulikschaltplan wie in Figur 5 mit einem separaten Stromventil in der Primärleitung und

Figur 7      einen Hydraulikschaltplan wie in Figur 6 mit elektrischer Umschaltung von Normalfahrbetrieb auf Notfahrbetrieb.

Beschreibung der Ausführungsbeispiele

Figur 2 zeigt einen, dem Stand der Technik entsprechenden Ausschnitt aus einem Hydraulikschaltplan zur Steuerung der Hydrauliköldrücke der an- und abtriebsseitigen Druckzylinder eines stufenlos übersetzenden Umschlingungsgetriebes. Das bekannte Umschlingungsgetriebe (10) umfaßt zwei Kegelscheibenpaare zwischen denen ein Obertragungsmittel (14), beispielsweise ein Schubgliederband, eine Kette, ein Keilriemen oder dergleichen, angeordnet ist. Beide Kegelscheibenpaare bestehen jeweils aus zwei Kegelscheiben (11, 12; 15, 16), die hydraulisch gegeneinander verspannbar ausgebildet sind. Die dazu notwendigen Kolben- und Zylinderteile sind vorzugsweise zumindest in einem Teil der Kegelscheiben integriert. Die von diesen Teilen eingeschlossenen Kolbenräume sind auf der Primärseite der Kolbenraum (13) und auf der Sekundärseite der Kolbenraum (17). Sie werden entsprechend der einzustellenden Obersetzung mit dem dafür erforderlichen Arbeitsdruck beaufschlagt.

Figur 1 enthält ein Diagramm, in dem das Verhältnis zwischen der Klemmkraft $K_p$ des Primärzylinders und Klemmkraft $K_s$ des Sekundärzylinders über dem Übersetzungsverhältnis i des Umschlingungsgetriebes schematisch aufgetragen ist. Auf der Abszisse des Diagramms ist das Übersetzungsverhältnis nach rechts steigend aufgetragen. Das mit "Low" bezeichnete, maximale Übersetzungsverhältnis wird in der Regel für das Anfahren des Fahrzeugs gewählt, während das mit "Overdrive" bezeichnete, minimale Übersetzungsverhältnis dem längsten Gang entspricht. Die obere, den gesamten Obersetzungsbereich überspannende Kurve 1 gibt die Klemmkraftverhältnisse an, die zur Drehmomentübertragung bei Vollastbetrieb erforderlich sind. Die untere, ebenfalls den gesamten Obersetzungsbereich überspannende Kurve 2 gibt die Klemmkraftverhältnisse für ein zu übertragendes Drehmoment von annähernd Null wieder.

Zur Aufbringung der notwendigen Klemmkräfte an den Scheibenpaaren (11, 12) und (15, 16) wird für den Notfahrbetrieb beispielsweise eine in Figur 2 dargestellte, bekannte Hydraulikschaltung verwendet. Eine Pumpe (20) versorgt zum einen über eine Sekundärleitung (71) direkt den sekundärseitigen Kolbenraum (17). Zum anderen fördert sie über die Leitungen (72) und (73) unter Zwischenschaltung eines Druckbegrenzungsventils (30) Hydrauliköl in die Primärleitung (74), über die der primärseitige Kolbenraum (13) gespeist wird. An der Verbindungsstelle zwischen den Leitungen (73) und (74) zweigt eine weiterführende Leitung (75) ab, die über ein weiteres Druckbegrenzungsventil (40) in die ablaufende Leitung (92) übergeht. Die gesamte für die Kegelscheibenverstellung nicht benötigte Pumpenfördermenge strömt über die beiden Druckbegrenzungsventile (30) und (40) mit relativ niedrigem Druck in die Leitung (92), von wo aus sie anderen Getriebefunktionen wie Kupplungsansteuerung und Schmierung zur Verfügung steht. Ober die Druckbegrenzungsventile (30) und (40) wird der Druck von der Pumpe (20) bzw. der Sekundärleitung (71) bis zur Leitung (92) zweistufig abgesenkt, wodurch sich ein konstantes Klemmkraftverhältnis $K_p/K_s$ entsprechend der waagerechten Linie 3 des Diagramms aus Figur 1 ergibt. Hierbei ist "$K_p$" die primärseitige Klemmkraft, während "$K_s$" die sekundärseitige Klemmkraft darstellt. Eine Obersetzungsverstellung ist somit entsprechend dem Verlauf der Linie 3 nur in begrenztem Umfang möglich. Wird beispielsweise das Getriebeeingangsmoment von Null auf den Maximalwert angehoben, so verstellt sich die Getriebeübersetzung von annähernd "Overdrive" zu einer Obersetzung nahe "Low".

In den gezeigten Ausführungsbeispielen sind die Leitungen, Ventile und Drosselstellen im Bezug auf die primär- und sekundärseitigen Kolbenräume dargestellt. Selbstverständlich ist es auch denkbar, die Sekundärseite mit der Primärseite zu vertauschen.

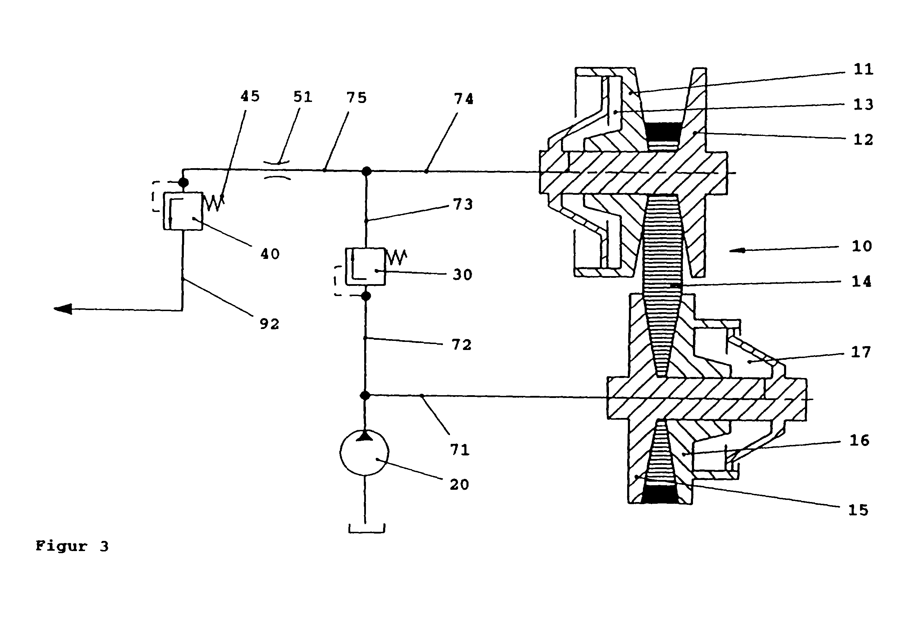

In den Figuren 3 bis 7 sind einzelne Hydraulikschaltungen dargestellt, mit deren Hilfe das Klemmkraftverhältnis so verändert werden kann, daß auch im Notfahrbetrieb der gesamte Obersetzungsbereich ausnutzbar wird. Dazu ist in jeder Hydraulikschaltung zumindest ein Drosselventil (51, 52; 61-63) zwischen der Pumpe (20) und der weiterführenden Leitung (92) eingebaut bzw. zugeschaltet, über das das Klemmkraftverhältnis $K_p/K_s$ abhängig von der Motordrehzahl verändert wird. Als Voraussetzung hierfür muß die Fördermenge der Pumpe (20) mit steigender Motordrehzahl stetig zunehmen. Der volumenstromabhängige Druckabfall p an der Drosselstelle errechnet sich dann aus dem Hagen-Poiseuilleschen Gesetz (1) bzw. nach Umformung aus der Gleichung (2):

$$Q = \alpha * A * (2(p_1 - p_2)/o)^{1/2} \qquad (1)$$

$$p = p_1 - p_2 = (o * Q^2)/(2\alpha^2 * A^2) \qquad (2)$$

mit

$\alpha$: Durchflußkoeffizient
A: Drosselquerschnittsfläche
o: Hydrauliköldichte
Q: Volumenstrom
$p_1$, $p_2$: Druck vor und nach dem Drosselventil

Der Druckanstieg p wird benutzt, um entweder die primäre Klemmkraft $K_p$ als Funktion der Pumpenfördermenge anzuheben oder entsprechend die sekundäre Klemmkraft $K_s$ zu senken bzw. die primäre Klemmkraft $K_p$ anzuheben und die sekundäre Klemmkraft $K_s$ abzusenken. Als Folge hiervon stellt sich bei niedriger Motordrehzahl ein Klemmkraftverhältnis $K_p/K_s$ ein, das in dem Diagramm von Figur 1 auf dem Niveau der Linie 4 liegt. Dadurch ist beim Anfahren bereits eine Obersetzung im Low-Bereich eingestellt. Bei hohen Motordrehzahlen stellt sich ein Klemmkraftverhältnis in Höhe der Linie 5 ein, so daß auch Obersetzungen im gesamten Overdrive-Bereich möglich sind.

Eine erste Variante zur Variation des Klemmkraftverhältnisses $K_p/K_s$ ist in Figur 3 dargestellt. Im Gegensatz zu dem bekannten Hydraulikschaltplan aus Figur 2 ist in Figur 3 in der Leitung (75) ein Drosselventil (51) angeordnet. Mit diesem Drosselventil wird der mit dem Druckbegrenzungsventil (40) primärseitig eingestellte Begrenzungsdruck zusätzlich um einen pumpenvolumenstromabhängigen bzw. motordrehzahlabhängigen Druckwert p angehoben. Das Drosselventil (51) kann auch mit einem variablen Drosselquerschnitt ausgestattet sein. Ebenfalls kann die ansteigende Kennlinie der Regelfeder (45) des Druckbegrenzungsventils (40) mit zunehmendem Öffnungsquerschnitt zu einem Druckanstieg führen.

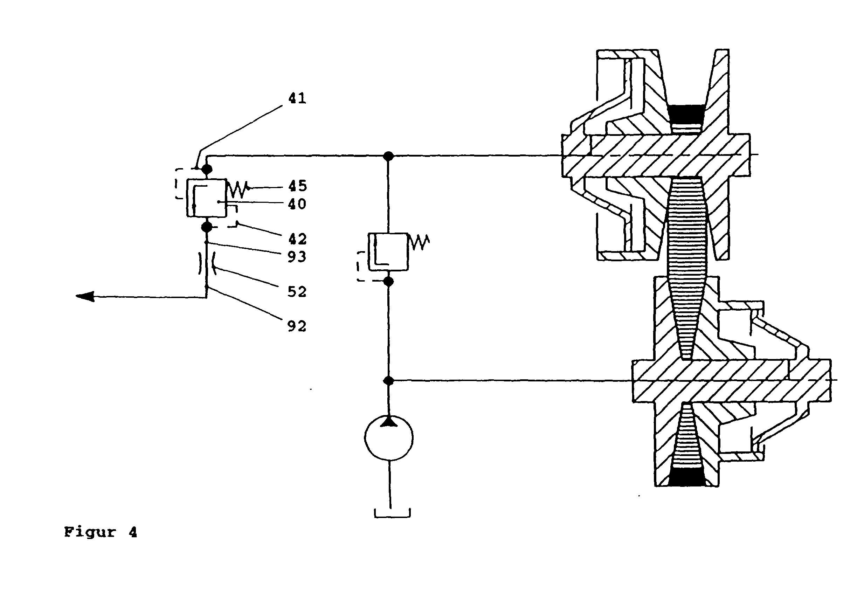

In Figur 4 ist ein Drosselventil (52) in der abführenden Leitung (92) angeordnet. Der abflußseitige Druck in dem zwischen dem Druckbegrenzungsventil (40) und dem Drosselventil (52) liegenden Leitungsabschnitt (93) wird über eine Steuerleitung (42) auf das Druckbegrenzungsventil (40) zurückgeführt und wirkt parallel zu der Regelfeder (45). Die Federrate der Regelfeder (45) ist so niedrig ausgelegt, damit bei relativ kleinem Klemmkraftverhältnis, vgl. Linie 4 im Diagramm aus Figur 1, angefahren werden kann. Die Summe aus der Federkraft der Regelfeder (45) und dem Produkt aus dem Druck in Steuerleitung (42) und der entsprechenden Kolben- bzw. Schieberfläche im Druckbegrenzungsventil (40) bewirkt durch das Verstellen des Ventils (40) ein Anheben des Klemmkraftverhältnisses auf die Linie 5 bei steigender Motordrehzahl.

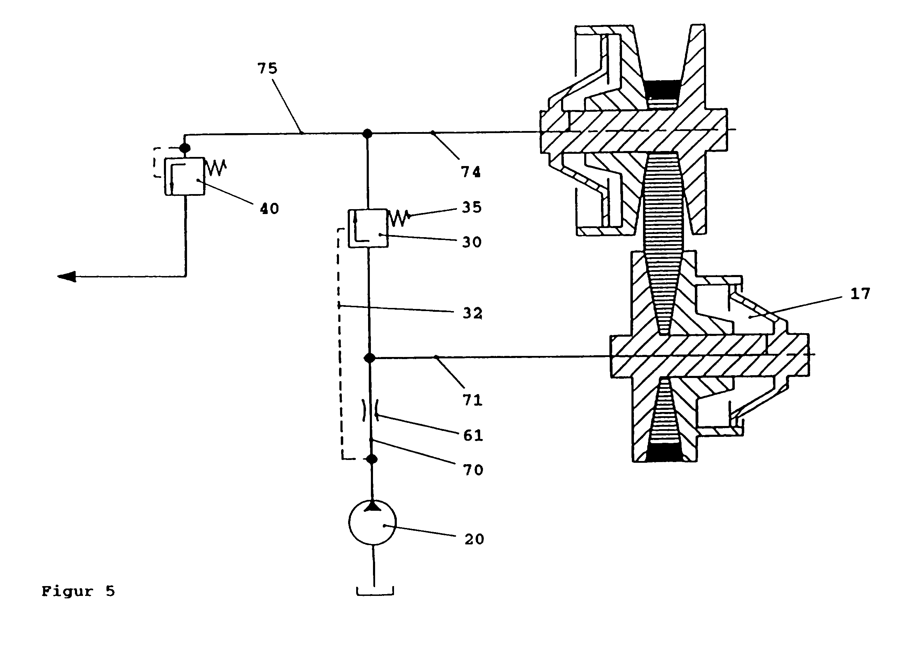

Mit dem Hydraulikschaltplan aus Figur 5 wird eine Absenkung des Sekundärdruckes im Kolbenraum (17) bewirkt. Dazu ist in der Leitung (70) zwischen der Pumpe (20) und der Abzweigung der Sekundärleitung (71) ein Drosselventil (61) angeordnet. Das nach der Abzweigung sitzende Druckbegrenzungsventil (30) wird auf seiner der Regelfeder (35) gegenüberliegenden Seite von einer Steuerleitung (32) angesteuert, die den Druck zwischen der Pumpe (20) und dem Drosselventil (61) aus der Leitung (70) abgreift. Bei dieser Variante kann in der Leitung (75) ein weiteres Drosselventil integriert werden. Dadurch wird die Abhängigkeit des Druckes im primärseitigen Kolbenraum (13) von der Motordrehzahl verstärkt.

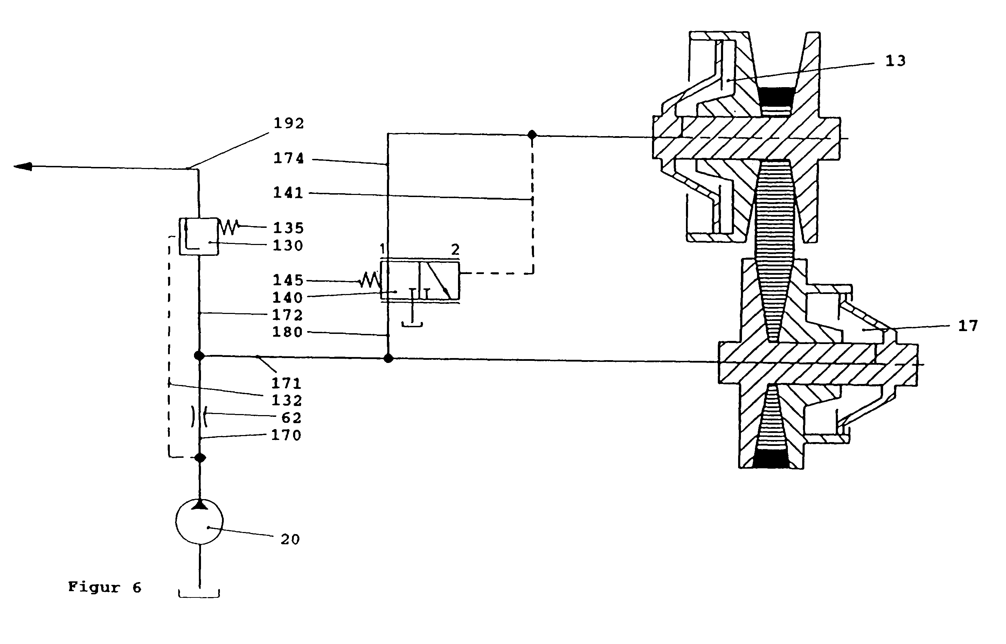

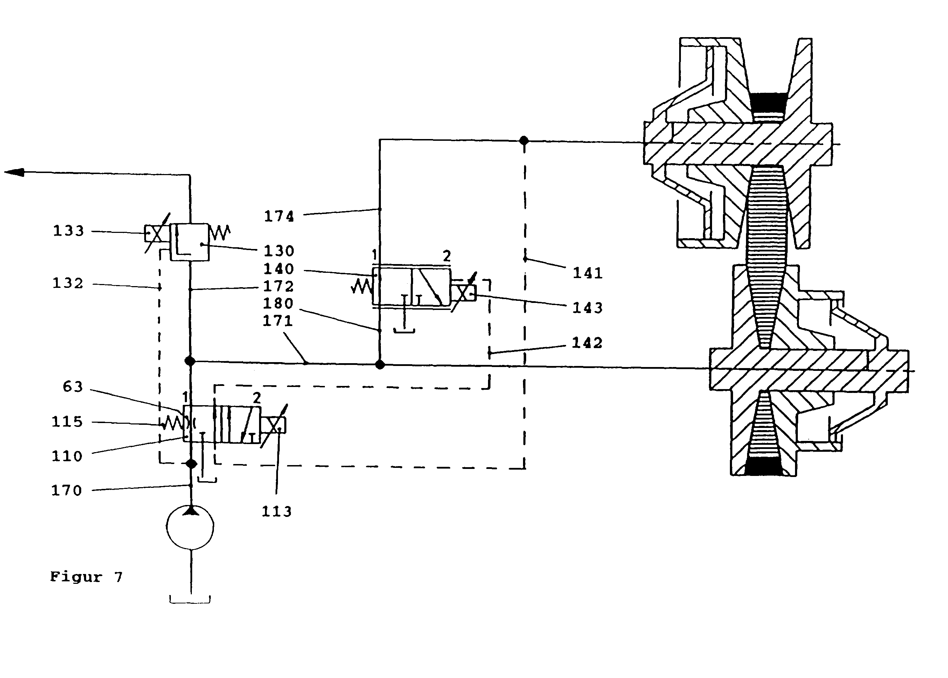

Eine weitere Variation der Sekundärdruckabsenkung ist in Figur 6 und 7 dargestellt. Bei der in Figur 6 gezeigten Schaltung für den Notfahrbetrieb versorgt die Pumpe (20) zunächst über ein in der Leitung (170) integriertes Drosselventil (62) und die Leitung (171) den sekundärseitigen Kolbenraum (17). Von der Leitung (171) zweigt eine Leitung (180) ab, in der ein Stromventil (140) angeordnet ist. Von dem Ventil (140) führt zum primärseitigen Kolbenraum (13) eine Leitung (174). Das Ventil (140) ist ein kontinuierlich drosselndes 3/2-Wegeventil mit linksseitiger Federrückstellung und einer rechtsseitig angeschlossenen Steuerleitung (141). Letztere ist an der Primärleitung (174) angeschlossen.

An der Verbindungsstelle zwischen den Leitungen (170) und (171) zweigt eine Leitung (172) ab, die über ein Druckbegrenzungsventil (130) in eine Leitung (192) führt. Das Druckbegrenzungsventil (130) wird über eine Steuerleitung (132) aus der Leitung (170) gespeist. Dabei ist die Steuerleitung zwischen der Pumpe (20) und dem Drosselventil (62) angeschlossen. Das Druckbegrenzungsventil (130) senkt den Sekundärdruck in der Leitung (172) direkt auf ein niedrigeres Zwischendruckniveau in der Leitung (192) ab.

Der Primärdruck wird über das Stromventil (140) eingestellt. Bei einem niedrigen Primärdruck im Kolbenraum (13) hält die Rückstellfeder (145) den Schieber des Stromventils (140) in der Stellung 1, womit die Sekundärleitung (171) über die Leitung (180) mit der Primärleitung (174) verbunden ist. Dagegen fließt bei einem hohen Druck im Kolbenraum (13) Hydrauliköl über die Steuerleitung (141) zum Stromventil (140) und bewegt dessen Schieber in die entgegengesetzte Richtung, also in die Stellung 2. Nun fließt Hydrauliköl, vom Kolbenraum (13) kommend, in den Tank ab.

Das Schaltungsprinzip für den Notfahrbetrieb aus Figur 6 ist in Figur 7 nochmals dargestellt. Allerdings sind in Figur 7 zusätzlich Mittel vorgesehen, die ein Umschalten vom Normalfahrbetrieb auf den Notfahrbetrieb zulassen. Dazu ist in die Leitung (170) zwischen der Abzweigung für die Steuerleitung (132) des Druckbegrenzungsventils (130) und der Abzweigung der Sekundärleitung (171) ein 5/2-Wegeventil (110) eingebaut. Das 5/2-Wegeventil (110) hat an seiner einen Seite eine Rückstellfeder (115) und auf seiner anderen Seite eine elektromagnetische, ggf. einstellbare, Betätigung (113). In seiner Schaltstellung 1, die das Ventil im Notfahrbetrieb, beispielsweise bei einem Ausfall der elektrischen Ansteuerung, einnimmt, ist zum einen der Druckmittelfluß von der Leitung (170) zur Leitung (172) über die im Wegeventil integrierte Drosselstelle (63) gedrosselt. Zum anderen ist die von der Primärleitung (174) abzweigende Steuerleitung (141) mit der Steuerleitung (142) für das Stromventil (140) verbunden. Der fünfte Anschluß am Stromventil (140) führt zum Tank zurück.

Im Normalfahrbetrieb nimmt das 5/2-Wegeventil (110) die Schaltstellung 2 ein. Damit ist die Leitung (170) auf ungedrosselten Durchgang geschaltet, die Steuerleitung (141) gesperrt und die Steuerleitung (142) zum Tank entlastet.

Des weiteren ist das Druckbegrenzungsventil (130) mit einer beispielsweise verstellbaren, elektrischen Betätigung (133) ausgestattet. Letztere wird im Normalfahrbetrieb bestromt, womit der Druck in der vor dem Druckbegrenzungsventil (130) liegenden Leitung (172) auf ein für den Normalfahrbetrieb notwendiges Druckniveau geregelt wird.

Auch das Stromventil (140) ist mit einer beispielsweise einstellbaren, elektromagnetischen Betätigung (143) ausgestattet. Abhängig von der Größe der Bestromung der Betätigung (143) befindet sich das Stromventil (140) in der Schaltstellung 1 oder 2. In Schaltstellung 1 ist die von der Sekundärleitung (171) abzweigende Leitung (180) mit der Primärleitung (174) verbunden. In Schaltstellung 2 ist die Primärleitung (174) zum Tank hin entlastet und die Leitung (180) abgesperrt. Eine Bestromung der Betätigung (143) erfolgt auch hier nur im Normalfahrbetrieb.

Die elektrischen Ventilbetätigungen können auch durch hydraulische Vorsteuerventile oder andere gleichwirkende Mittel ersetzt werden.

**Patentansprüche**

1. Hydrauliknotsteuerung für eine Änderung der Hydrauliköldrücke in der hydraulischen Kegelscheibenaxialverstellung eines stufenlosen Umschlingungsgetriebes zur Variation der Klemmkraftverhältnisse, bei der in einer offenen Hydraulikschaltung eine Pumpe (20) die jeweiligen Kolbenräume der sekundären und primären Axialverstellungen mit Hydrauliköl versorgt, wobei der Primär- und der Sekundäröldruck über separate Ventile zur Öldruckbegrenzung gesteuert wird, dadurch gekennzeichnet, daß zwischen der Pumpe (20) und der den Ausgang der offenen Hydraulikschaltung darstellenden Leitung (92, 192) mindestens ein Drosselventil (51, 52, 61-63) an einer den Pumpenvolumenstrom beeinflussenden Stelle angeordnet ist.

2. Hydrauliknotsteuerung gemäß dem Anspruch 1, dadurch gekennzeichnet, daß das Drosselventil (51) zwischen einer zum Kolbenraum (13) führenden Primärleitung (74) und einem Druckbegrenzungsventil (40) angeordnet ist.

3. Hydrauliknotsteuerung gemäß dem Anspruch 1, dadurch gekennzeichnet, daß das Drosselventil (52) in Strömungsrichtung nach dem zweiten Ventil (40) angeordnet ist, wobei das Ventil (40) als Druckgefälleventil ausgebildet ist, dessen zweite Steuerleitung (42) an einem zwischen dem Ventil (40) und dem Drosselventil (52) liegenden Leitungsabschnitt (93) angeschlossen ist.

4. Hydrauliknotsteuerung gemäß dem Anspruch 1, dadurch gekennzeichnet, daß das Drosselventil (61; 62) in Strömungsrichtung vor der zum Kolbenraum (17) der sekundären Axialverstellungen führenden Sekundärleitung (71; 171) und vor dem ersten Druckbegrenzungsventil (30; 130) angeordnet ist, wobei die Steuerleitung (32; 132) des Druckbegrenzungsventils (30; 130) vor dem Drosselventil (61; 62) angeschlossen ist.

5. Hydrauliknotsteuerung gemäß dem Anspruch 4, dadurch gekennzeichnet, daß die Primärleitung (174) aus der Sekundärleitung (171) abzweigt, wobei in der Primärleitung (174) ein kontinuierlich drosselndes Stromventil (140) mit Druckminderfunktion angeordnet ist.

6. Hydrauliknotsteuerung gemäß der Ansprüche 4 und 5, dadurch gekennzeichnet, daß nach dem Druckbegrenzungsventil (130) die Leitung (192) angeordnet ist.

7. Hydrauliknotsteuerung gemäß dem Anspruch 4, dadurch gekennzeichnet, daß dem ersten Druckbegrenzungsventil (30) die zum Kolbenraum (13) führende Primärleitung (74) und die zum zweiten Druckbegrenzungsventil (40) führende Leitung (75) nachgeschaltet sind, wobei in der Leitung (75) ein weiteres Drosselventil integriert ist.

8. Hydrauliknotsteuerung gemäß einem der Ansprüche 1 bis 7, dadurch gekennzeichnet, daß zumindest an einem Teil der den Öldruck regelnden oder begrenzenden Ventile jeweils eine elektromagnetische oder hydraulische Betätigungsvorrichtung angeordnet ist, mit deren Hilfe die Ventile beim Übergang von Notfahrbetrieb auf den Normalfahrbetrieb auf Durchgang oder vorwählbare Druckbegrenzung schaltbar sind.

9. Hydrauliknotsteuerung gemäß einem der Ansprüche 4 bis 7, dadurch gekennzeichnet, daß die Drosselstelle (63) in einem mit einer elektromagnetischen oder hydraulischen Betätigungsvorrichtung (113) ansteuerbaren Wegeventil (110) integriert ist, das im Notfahrbetrieb den Volumenstrom durch die Leitung (170) drosselt und den Steuerölstrom durch die Steuerleitungen (141) und (142) auf Durchgang schaltet, während es im Normalfahrbetrieb die Leitung (170) durchschaltet, die Steuerleitung (141) von der Steuerleitung (142) absperrt und die Steuerleitung (142) zum Tank hin entlastet.

10. Hydrauliknotsteuerung gemäß einem der Ansprüche 1 bis 9, dadurch gekennzeichnet, daß das Druckbegrenzungsventil (130) mit einer elektromagnetischen Betätigungsvorrichtung (133) ausgestattet ist.

11. Hydrauliknotsteuerung gemäß einem der Ansprüche 1 bis 9, dadurch gekennzeichnet, daß das Stromventil (140) mit einer elektromagnetischen Betätigungsvorrichtung (143) versehen ist.

12. Hydrauliknotsteuerung gemäß einem der Ansprüche 1 bis 11, dadurch gekennzeichnet, daß die Drosselquerschnittsflächen der Drosselventile (51, 52, 61-63) veränderbar sind.

13. Hydrauliknotsteuerung gemäß einem der Ansprüche 1 bis 12, dadurch gekennzeichnet, daß die Regel- und Rückstellfedern (35, 45, 115, 135, 145) der Ventile (30, 40, 110, 130, 140) einstellbar sind.

14. Hydrauliknotsteuerung gemäß Anspruch 13, dadurch gekennzeichnet, daß die Regel- und Rückstellfedern (35, 45, 115, 135, 145) zumindest teilweise nichtlineare Kennlinien aufweisen.

**Claims**

1. Hydraulic emergency control for a change in the hydraulic-oil pressures in the hydraulic cone-pulley-axial-adjustment means of a continuously variable belt-and-pulley transmission for varying the clamping-force ratios, in which hydraulic emergency control, in an open hydraulic circuit, a pump (20) supplies the respective piston spaces of the secondary and primary axial-adjustment means with hydraulic oil, the primary and secondary oil pressures being controlled via separate valves for limiting the oil pressure, characterized in that, between the pump (20) and the line (92, 192) constituting the outlet of the open hydraulic circuit, at least one choke valve (51, 52, 61-63) is arranged at a point influencing the pump volumetric flow.

2. Hydraulic emergency control according to Claim 1, characterized in that the choke valve (51) is arranged between a primary line (74) leading to the piston space (13) and a pressure-limiting valve (40).

3. Hydraulic emergency control according to Claim 1, characterized in that the choke valve (52) is arranged downstream of the second valve (40) in the direction of flow, the valve (40) being designed as a differential pressure valve, the second control line (42) of which is connected to a line section (93) lying between the valve (40) and the choke valve (52).

4. Hydraulic emergency control according to Claim 1, characterized in that the choke valve (61; 62), in the direction of flow, is arranged upstream of the secondary line (71; 171) leading to the piston space (17) of the secondary axial-adjustment means and upstream of the first pressure-limiting valve (30; 130), the control line (32; 132) of the pressure-limiting valve (30; 130) being connected upstream of the choke valve (61; 62).

5. Hydraulic emergency control according to Claim 4, characterized in that the primary line (174) branches off from the secondary line (171), a continuously choking flow control valve (140) having a pressure-reducing function being arranged in the primary line (174).

6. Hydraulic emergency control according to Claims 4 and 5, characterized in that the line (192) is arranged downstream of the pressure-limiting valve (130).

7. Hydraulic emergency control according to Claim 4, characterized in that the primary line (74) leading to the piston space (13) and the line (75) leading to the second pressure-limiting valve (40) are arranged downstream of the first pressure-limiting valve (30), a further choke valve being integrated in the line (75).

8. Hydraulic emergency control according to one of Claims 1 to 7, characterized in that in each case an electromagnetic or hydraulic actuating device is arranged at least on some of the valves which control or limit the oil pressure, by means of which actuating devices the valves can be switched to throughflow or preselectable pressure limiting when changing over from emergency driving operation to the normal driving operation.

9. Hydraulic emergency control according to one of Claims 4 to 7, characterized in that the choke point (63) is integrated in a directional valve (110), which can be activated with an electromagnetic or hydraulic actuating device (113) and in emergency driving operation chokes the volumetric flow through the line (170) and switches the control-oil flow through the control lines (141) and (142) to throughflow, whereas in normal driving operation it switches the line (170) to throughflow, shuts off the control line (141) from the control line (142) and relieves the control line (142) to the tank.

10. Hydraulic emergency control according to one of Claims 1 to 9, characterized in that the pressure-limiting valve (130) is provided with an electromagnetic actuating device (133).

11. Hydraulic emergency control according to one of Claims 1 to 9, characterized in that the flow control valve (140) is provided with an electromagnetic actuating device (143).

12. Hydraulic emergency control according to one of Claims 1 to 11, characterized in that the choke cross-sectional areas of the choke valves (51, 52, 61-63) are variable.

13. Hydraulic emergency control according to one of Claims 1 to 12, characterized in that the regulating and restoring springs (35, 45, 115, 135, 145) of the valves (30, 40, 110, 130, 140) are adjustable.

14. Hydraulic emergency control according Claim 13, characterized in that the regulating and restoring springs (35, 45, 115, 135, 145) have at least partly non-linear characteristics.

**Revendications**

1. Commande hydraulique de secours pour modifier la pression du liquide hydraulique dans le réglage axial hydraulique des poulies coniques d'un variateur continu à courroie pour modifier des rapports des forces de serrage, selon lequel dans un circuit hydraulique ouvert une pompe (20) alimentant en liquide hydraulique les chambres de piston respectives des réglages axiaux secondaire et primaire, la pression du liquide hydraulique primaire et secondaire étant commandée par des soupapes séparées pour limiter la pression de liquide hydraulique,
caractérisée par
au moins une soupape d'étranglement (51, 52, 61-63) à un endroit influençant le débit volumique de la pompe entre la pompe (20) et la conduite (92, 192) qui représente la sortie du circuit hydraulique ouvert.

2. Commande hydraulique de secours selon la revendication 1,
caractérisée en ce que
la soupape d'étranglement (51) se trouve entre une conduite primaire (74) arrivant à la chambre de piston (13) et une soupape de limitation de pression (40).

3. Commande hydraulique de secours selon la revendication 1,
caractérisée en ce que
la soupape d'étranglement (52) se trouve en avant de la seconde soupape (40), cette seconde soupape (40) étant réalisée par des soupapes de chute de pression, et dont la seconde conduite de commande (42) est reliée à un segment de conduite (93) entre la soupape (40) et la soupape d'étranglement (52).

4. Commande hydraulique de secours selon la revendication 1,
caractérisée en ce que
la soupape d'étranglement (61, 62) se trouve dans la direction de l'écoulement, en amont de la chambre de piston (17) des conduites secondaires (71, 171) et en amont de la première soupape de limitation de pression (30, 130), la conduite de commande (32, 132) de la soupape de limitation de pression (30, 130) étant raccordée en amont de la soupape d'étranglement (62, 61).

5. Commande hydraulique de secours selon la revendication 4,
caractérisée en ce que
la conduite primaire (174) dérive de la conduite secondaire (171) et une soupape de débit (140) étranglant en continu est prévue dans la conduite primaire (174) avec une fonction de réduction de pression.

6. Commande hydraulique de secours selon les revendications 4 et 5,

caractérisée en ce que
la conduite (192) se trouve en aval de la soupape de limitation de pression (130).

7. Commande hydraulique de secours selon la revendication 4,
caractérisée en ce que
la conduite primaire (74) reliée à la chambre de piston (13) et la conduite (75) reliée à la seconde soupape de limitation de pression (40) sont branchées après la première soupape de limitation de pression (30), et la conduite (75) est intégrée à une autre soupape d'étranglement.

8. Commande hydraulique de secours selon l'une des revendications 1 à 7,
caractérisée en ce qu'
au moins sur une partie des soupapes régulant ou limitant la pression du liquide hydraulique, il est prévu chaque fois un dispositif d'actionnement électromécanique ou hydraulique qui permet de commuter les soupapes au passage du mode de fonctionnement de secours sur le mode de fonctionnement normal au passage ou à une limitation de pression présélectionnée.

9. Commande hydraulique de secours selon l'une des revendications 4 à 7,
caractérisée en ce que
les points d'étranglement (63) sont intégrés dans un distributeur à tiroir (110) commandé par un actionneur (113) électromagnétique ou hydraulique, et en mode de fonctionnement de secours, on étrangle le débit volumique par la puissance (170) et le courant de liquide hydraulique de commande à travers les conduites de commande (141, 142) commute l'état passant alors qu'en mode de fonctionnement normal, la conduite (170) est commutée, la conduite de commande (141) étant coupée de la conduite de commande (142) et la conduite (142) se décharge vers le réservoir.

10. Commande hydraulique de secours selon l'une des revendications 1 à 9,
caractérisée en ce que
la soupape de limitation de pression (130) est équipée d'un actionneur électromagnétique (133).

11. Commande hydraulique de secours selon l'une des revendications 1 à 9,
caractérisée en ce que
la soupape de débit (140) est munie d'un dispositif d'actionnement électromagnétique (143).

12. Commande hydraulique de secours selon l'une des revendications 1 à 11,
caractérisée en ce que
les surfaces des sections d'étranglement des soupapes d'étranglement (51, 52, 61-63) sont variables.

13. Commande hydraulique de secours selon l'une des revendications 1 à 12,
caractérisée en ce que
les ressorts de réglage et de rappel (35, 45, 115, 135, 145) des soupapes (30, 40, 110, 130, 140) sont réglables.

14. Commande hydraulique de secours selon la revendication 13,
caractérisée en ce que
les ressorts de réglage et de rappel (35, 45, 115, 135, 145) ont au moins en partie des caractéristiques non linéaires.

Figur 1

Figur 2

11
13
12
10
14
17
16
15

75
74
73
30
72
71
20
40
92

10

EP 0 828 955 B1

Figur 3

Figur 4

Figur 5

Figur 6

14

Figur 7